# FASCICULE DE BREVET EUROPEEN

(11) **EP 0 603 347 B1**
(45) Date de publication et mention de la délivrance du brevet: **03.09.1997**
(21) Numéro de dépôt: 93909752.3
(22) Date de dépôt: 07.06.1993
(51) Int. Cl.: A23L 1/16

(54) **ENSEMBLE DE PATE ALIMENTAIRE ET PROCEDES POUR SA FABRICATION**
PASTÖSES LEBENSMITTELPRODUKT UND VERFAHREN ZUR HERSTELLUNG
ALIMENTARY PASTE FOOD PRODUCT AND METHODS OF MANUFACTURE

(30) Priorité: 11.06.1992 CH 1844/92
(43) Date de publication de la demande: 29.06.1994
(73) Titulaire: CAVICCHIOLO; Romano, CH-1223 Cologny (CH)
(72) Inventeur: CAVICCHIOLO; Romano, CH-1223 Cologny (CH)
(74) Mandataire: KIRKER & Cie S.A.
(86) Numéro de dépôt international: CH9300143
(87) Numéro de publication internationale: WO9325089

(56) Documents cités:
- DE-A- 3 345 967
- FR-A- 1 004 293
- PATENT ABSTRACTS OF JAPAN, vol. 010, no. 203 (C-360), 16 Juillet 1986; & JP-A-61 047 161
- PATENT ABSTRACTS OF JAPAN, vol. 014, no. 024 (C-677), 18 Janvier 1990; & JP-A-1 265 864
- DATABASE WPIL, Section Ch, Week 8126, 1981, Derwent Publications Ltd., London, GB, Class D03, AN 81-47818D; & ZA-A-8 005 221

## Description

La présente invention concerne un ensemble de pâte alimentaire ainsi qu'un procédé pour sa fabrication.

Dans le domaine du "fast-food", on connaît bien les hamburgers et les sandwichs. Ces produits peuvent être consommés aisément sans assiettes ni couverts, puisqu'ils sont directement tenus avec la main avec une serviette ou non. Il est donc possible de les manger sans difficulté même en marchant.

D'autre part, on connaît le succès des pâtes alimentaires, telles que par exemple les spaghettis et les macaronis.

Pour consommer ces pâtes, il est nécessaire de les servir dans un récipient creux et de disposer d'au moins une fourchette. De plus, la présence de sauce rend très difficile la consommation de ces pâtes sans dégâts de taches sur les vêtements.

On connaît par le document Patent Abstracts of Japan, vol. 010, no. 203 (C-360), 16 juillet 1986, un ensemble de pâte alimentaire qui comporte un arrangement de tronçons parallèles. Lesdites pâtes, obtenues par extrusion, peuvent être chauffées, coupées et entourées par une feuille imperméable à l'air.

Le document Patent Abstracts of Japan, vol. 014, no. 024 (C-677), 18 janvier 1990, décrit un ensemble de pâte alimentaire (spaghetti konjak) qui comporte un arrangement de tronçons parallèles. Ces pâtes peuvent être chauffées et coupées.

Les pâtes décrites dans ces documents présentent une bonne apparence et sont faciles à emballer.

Le but de cette invention consiste à fournir une nouvelle forme de pâtes alimentaires qui, après cuisson, peuvent être consommées sans couverts, c'est-à-dire en les tenant avec la main comme un sandwich ou un hamburger.

L'invention a pour objet un ensemble de pâte alimentaire comprenant un arrangement de tronçons parallèles de pâte alimentaire ayant une section circulaire, caractérisé en ce que lesdits tronçons sont creux et collés les uns aux autres par humidification pour former un ensemble monolithique en tranche destiné à présenter après cuisson une structure interne hexagonale, cet assemblage présentant une surface supérieure et inférieure plane, la surface inférieure étant fermée, les creux desdits tronçons étant destinés à être remplis avec une sauce.

L'invention a aussi pour objet un procédé pour la fabrication de cet ensemble de pâte alimentaire et est caractérisée à cet effet, en ce que l'on dispose parallèlement selon une forme choisie le nombre choisi de tronçons de pâte à section circulaire et creux, qu'on mouille légèrement au moins l'extrémité des tronçons formant au moins une surface de l'arrangement et qu'on exerce une légère pression tendant à appliquer les tronçons les uns contre les autres pour former un assemblage monolithique en tranche.

Enfin l'invention a aussi pour objet un procédé de préparation de cet ensemble de pâte consommable, caractérisé en ce que l'on cuit l'ensemble de pâte dans un liquide de cuisson bouillant, qu'on le retire du liquide de cuisson, qu'on l'égoutte, qu'on le pose à plat, et qu'on introduit de la sauce dans certains au moins des tronçons de pâte creux.

Dans une variante, l'arrangement de tronçons de pâte est entouré au moins partiellement par une feuille d un matériau plastique résistant à la cuisson dans l'eau et présentant des ouvertures.

L'ensemble de pâte alimentaire selon l'invention peut être constitué d'un arrangement de forme carrée, rectangulaire, triangulaire, polygonale ou circulaire.

L'ensemble peut être constitué d'un arrangement de forme hexagonale. Dans ce cas, il comprend au moins 17 tronçons de pâte, chaque côté de l'hexagone étant constitué de 3 tronçons de pâte. Dans une autre variante, l ensemble hexagonal comprend 37 tronçons de pâte, chaque côté de l'hexagone étant constitué dans ce cas de 4 tronçons de pâte. Dans une autre variante, il comprend 61 tronçons de pâte, chaque côté de l'hexagone étant dans ce cas constitué de 5 tronçons de pâte. Il peut aussi comprendre 91 tronçons de pâte, chaque côté de l'hexagone étant alors constitué de 6 tronçons de pâte.

Ces tronçons peuvent être des macaronis d'une longueur comprise entre 1 et 4 cm.

Les dessins annexés illustrent à titre d'exemple deux formes d'exécution de l'invention.

La figure 1 représente une vue en perspective de l'ensemble selon la première forme d'exécution.

La figure 2 représente une vue en perspective à 45° de l'ensemble selon la seconde forme d'exécution.

La figure 3 représente une vue en perspective de l'ensemble selon la seconde forme d'exécution.

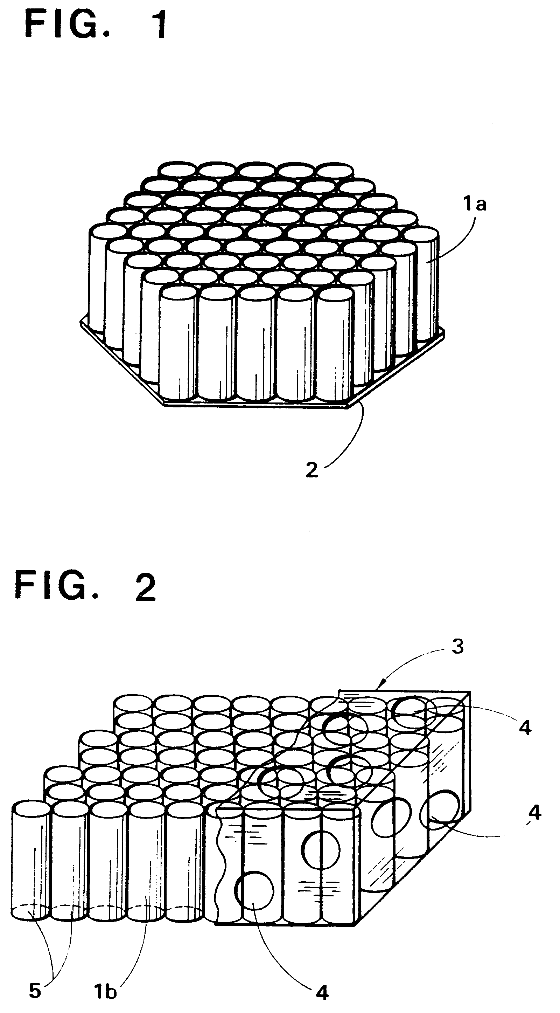

La figure 1 représente un arrangement hexagonal de 61 petits macaronis 1a disposés parallèlement et ayant tous une hauteur de 3 cm. Les extrémités des macaronis forment deux surfaces sensiblement planes et parallèles. Une des deux surfaces de l'assemblage est fermée par une fine plaque hexagonale 2 de pâte alimentaire de même dimension.

La figure 2 représente un arrangement rectangulaire de macaronis 1b disposés parallèlement dans un emballage 3 constitué d'une feuille en matériau plastique. Cet emballage 3 comprend des trous 4. Les extrémités 5 des macaronis formant la première surface sensiblement plane sont fermées. L'extrémité ouverte des macaronis forme une deuxième surface, de préférence plane et parallèle à la première.

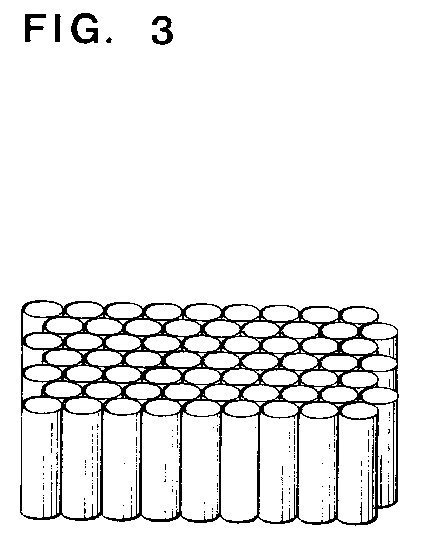

La figure 3 représente le même arrangement que celui représenté sur la figure 2, mais non emballé. Selon cette perspective, on voit que chaque macaroni situé à l'intérieur de la structure est en contact avec 6 autres macaronis.

Un procédé de préparation de l'ensemble de pâte selon l'invention consiste à assembler parallèlement et selon la forme choisie, le nombre choisi de tronçons de macaronis, à mouiller légèrement au moins l'une des extrémités des tronçons puis à exercer une légère pression, égale sur tous les côtés de la forme choisie. En effet, lorsqu'on humidifie une extrémité de l'assemblage de tronçons de pâte, cette humidité remonte par capillarité le long des génératrices en contact des tronçons voisins. Aprés séchage l'assemblage est monolithique, les tronçons étant collés ensemble. On obtient alors un ensemble de pâte par assemblage qui tient ensemble grâce au léger mouillage effectué sur la surface plane. Le mouillage peut être réalisé par vaporisation d'eau.

Dans le cas où l'extrémité des tronçons de macaronis formant la première surface plane n'est pas fermée, on peut fermer la surface plane de l'ensemble obtenu en appliquant la surface plane à fermer sur une plaque de pâte fraîche alimentaire légèrement mouillée, en appuyant l'ensemble sur ladite plaque, en découpant la plaque de pâte fraîche selon la même forme et la même dimension que l'ensemble, et en séchant le tout ou en procédant à sa cuisson immédiate. Si les macaronis étaient déjà séchés et subissent un deuxième séchage, cela n'a pas d'incidence sur la qualité du produit.

L'ensemble obtenu après séchage est solide et facilement transportable. Dans le cas où les extrémités des tronçons forment deux surfaces parallèles, le stockage est très avantageux puisque les ensembles peuvent être facilement mis les uns contre les autres et les uns sur les autres évitant ainsi les risques de cassures.

La fabrication de l'ensemble entouré par une feuille de plastique peut consister à disposer parallèlement des tronçons de pâte séchés libres ou réunis par léger mouillage dans un emballage de forme choisie en matériau plastique résistant à la cuisson et à fermer l'emballage.

Cet emballage doit avoir suffisamment d'ouvertures pour que lors de la cuisson dans l'eau bouillante, celle-ci puisse facilement pénétrer à l'intérieur. Cet emballage doit avoir des mesures précises en rapport avec l'arrangement de pâte, pour que les trous laissent pénétrer un maximum d'eau, que son volume permette aux pâtes de gonfler lors de la cuisson mais qu'il ne soit pas trop large pour éviter qu'un macaroni ne tombe au début ou pendant la cuisson et déstabilise la structure.

L'ensemble de pâte séchée est utilisé pour la préparation d'un assemblage de pâte directement consommable.

La préparation d'un produit consommable à partir de cet ensemble de pâte selon l'invention est le même que pour les autres formes de pâtes. Pour obtenir une cuisson "al dente", le temps de cuisson est cependant en principe prolongé par rapport à celui des pâtes lorsqu'elles ne sont pas assemblées.

L'ensemble peut aussi être précuit et réchauffé rapidement au dernier moment.

Dans le cas où la première surface plane de l'ensemble est fermée, soit par une plaque de pâte, soit parce que l'extrémité des tronçons de pâte est fermée, un procédé de préparation particulièrement avantageux de cet ensemble consiste à cuire l'ensemble de pâte séchée dans un liquide de cuisson bouillant, à le retirer du liquide de cuisson, à l'égoutter, à le poser à plat puis à introduire de la sauce dans certains au moins des tronçons de pâte creux.

L'introduction de sauce peut se faire soit par un déversement sur la surface de l'ensemble non fermé, soit à l'aide d'une machine comportant au plus le même nombre de sorties de sauce que de tronçons de pâte. Ce procédé permet d'obtenir un ensemble de pâte directement consommable avec ou sans couverts.

Dans le cas où l'ensemble est enfermé dans un emballage, on procède comme précédemment en plongeant directement l'emballage dans l'eau bouillante et en retirant entièrement ou partiellement l'emballage avant l' introduction de la sauce.

Ces procédés de préparation sont particulièrement adaptés à la cuisine dite fast-food.

La cuisson des macaronis situés au centre de l'ensemble est facilitée par le fait que la surface de contact entre chaque tronçon est extrêmement faible et permet la pénétration de l'eau à l'intérieur de la structure de l'ensemble. Dans le cas de pâte séchée, la durée de cuisson qui est normalement de 10 à 15 minutes doit toutefois être prolongée à au moins 20 minutes pour obtenir une cuisson "al dente".

La structure horizontale de cet ensemble est possible pour les raisons suivantes. En premier lieu, les macaronis situés à l'intérieur de l'ensemble, de forme ronde lorsqu'ils sont séchés, deviennent pratiquement hexagonaux après la cuisson, conférant de ce fait une bonne stabilité à la structure. La stabilité de l'ensemble est aussi fonction de la hauteur des pâtes. Il convient cependant que la hauteur des pâtes après cuisson corresponde à une hauteur agréable pour l'amener en bouche. La plaque de pâte fermant la surface plane de l'ensemble permet aussi d'augmenter la stabilité du tout. Lorsqu'on les prend avec la bouche, les macaronis peuvent se détacher facilement. Cet ensemble est en particulier destiné à être consommé comme un hamburger ou un sandwich.

L'ensemble selon l'invention peut aussi être utilisé comme une nouvelle forme de pâtes qui, après cuisson, peuvent être facilement retirées du liquide de cuisson et facilement égouttées.

Grâce à l'invention, il est maintenant possible de préparer un ensemble de pâte alimentaire qui, après cuisson, peut être consomme sans couverts, c'est-à-dire en le tenant avec la main comme un sandwich ou un hamburger. Les pâtes peuvent se détacher facilement une à une de l'assemblage et la présence de sauce ne présente aucun inconvénient même lorsque l'assemblage est mangé en marchant. Ces pâtes sont particulièrement adaptées pour la cuisine dite "fast-food".

Dans ce qui précède on a vu comment on obtenait un ensemble de pâte alimentaire par assemblage de tronçons de pâte creux juxtaposés et collés ensemble par humidification.

## Revendications

1. Ensemble de pâte alimentaire comprenant un arrangement de tronçons parallèles de pâte alimentaire ayant une section circulaire, caractérisé en ce que lesdits tronçons sont creux et collés les uns aux autres par humidification pour former un ensemble monolithique en tranche destiné à présenter après cuisson une structure interne hexagonale, cet assemblage présentant une surface supérieure et inférieure plane, la surface inférieure étant fermée, les creux desdits tronçons étant destinés à être remplis avec une sauce.

2. Ensemble de pâte alimentaire selon la revendication 1, caractérisé en ce que l'assemblage est de forme carrée, rectangulaire, triangulaire, polygonale ou circulaire.

3. Ensemble de pâte alimentaire selon la revendication 1, caractérisé en ce que l'assemblage est de forme hexagonale et qu'il comprend au moins 17 tronçons, et de préférence 37, 61 ou 91 tronçons de pâte.

4. Ensemble de pâte alimentaire selon l'une des revendications précédentes, caractérisé en ce qu'il présente une épaisseur séparant la surface supérieure et inférieure déterminée de façon que l'assemblage présente une bonne stabilité et de façon qu'il soit agréable pour l'amener en bouche.

5. Ensemble de pâte alimentaire selon la revendication 4, caractérisé en ce que les tronçons de pâte alimentaire sont des macaronis d'une longueur comprise entre 1 et 4 cm.

6. Ensemble selon l'une des revendications précédentes caractérisé en ce que la surface inférieure est fermée par une plaque de pâte alimentaire de même forme et de même dimension que l'arrangement.

7. Ensemble de pâte alimentaire selon l'une des revendications 1 à 6, caractérisé en ce que l'arrangement de tronçons de pâte est entouré au moins partiellement par une feuille d'un matériau plastique résistant à la cuisson dans l'eau et présentant des ouvertures.

8. Procédé pour la fabrication d'un ensemble de pâte alimentaire selon l'une des revendications 1 à 7, caractérisé en ce que l'on dispose parallèlement selon une forme choisie le nombre choisi de tronçons de pâte à section circulaire et creux, qu'on mouille légèrement au moins l'extrémité des tronçons formant au moins une surface de l'arrangement et qu'on exerce une légère pression tendant à appliquer les tronçons les uns contre les autres pour former un assemblage monolithique en tranche.

9. Procédé selon la revendication 10, caractérisé en ce qu'on applique ensuite la surface de l'assemblage sur une plaque de pâte alimentaire de préférence légèrement mouillée, qu'on appuie l'assemblage sur ladite plaque, qu'on découpe la plaque de pâte selon la même forme et la même dimension que l assemblage, et qu'on sèche ou cuise immédiatement l'ensemble.

10. Procédé selon la revendication 8, caractérisé en ce que l'on dispose un arrangement de tronçons de pâte de forme choisie dans un emballage constitué par une feuille en matériau plastique.

11. Procédé de préparation d'un ensemble de pâte alimentaire consommable, caractérisé en ce que l'on cuit l'ensemble de pâte selon l'une des revendications 1 à 7, dans un liquide de cuisson bouillant, qu'on le retire du liquide de cuisson, qu'on l'égoutte, qu'on le pose à plat, et qu'on introduit de la sauce dans certains au moins des tronçons de pâte creux.

## Claims

1. An alimentary paste food product including an arrangement of parallel lengths of alimentary paste of a circular cross-section, characterized in that said lengths are hollow and bonded together by wetting, to form a slab-shaped monolithic assembly designed for exhibiting, after cooking, an internal hexagonal structure, this assembly having an upper face and a lower face, the lower face being closed and the hollows of said lengths being designed for filling with a sauce.

2. An alimentary paste food product according to claim 1, characterized in that the assembly has a shape which is square, rectangular, triangular, polygonal or circular.

3. An alimentary paste food product according to claim 1, characterized in that the assembly has a hexagonal shape and includes at least 17 lengths and, preferably 37, 61 or 91 paste lengths.

4. An alimentary paste food product according to one of the preceding claims, characterized in that it has a thickness between the upper and lower faces selected so that the assembly exhibit a good stability and be easy to place in the mouth.

5. An alimentary paste food product according to claim 4, characterized in that the lengths of alimentary paste are macaronis of a length comprised between 1 and 4 cm.

6. An alimentary paste food product according to one of the preceding claims, characterized in that the lower face is closed by a sheet of alimentary paste of the same shape and size as the arrangement.

7. An alimentary paste food product according to one of claims 1 to 6, characterized in that the arrangement of paste lengths is surrounded at least partly by a sheet of a plastic material capable of resisting to cooking in water and having openings.

8. A process for manufacturing an alimentary paste food product according to one of claims 1 to 7, characterized in that the selected number of hollow lengths, which are circular in cross-section, are placed in a parallel arrangement of the selected shape, in that at least the end of the lengths forming at least one face of the arrangement is slightly wetted and in that a slight pressure is applied to press the lengths against one another to form a monolithic slab-shaped assembly.

9. A process according to claim 8, characterized in that a sheet of alimentary paste is subsequently applied against the surface of the assembly, which sheet is preferably slightly wetted, in that the assembly is pressed against said sheet, in that the sheet of paste is cut out to have the same shape and size as the assembly and in that the assembly is dried or cooked immediately.

10. A process according to claim 8, characterized in that an arrangement of lengths of paste of the selected shape is packaged using a sheet of plastic material.

11. A process for manufacturing an edible alimentary paste food product, characterized in that the paste product according to one of claims 1 to 7 is cooked in a boiling cooking liquid, separated from the cooking liquid, placed flat on a dish and in that sauce is introduced into at least some of the hollow lengths of the alimentary paste.

## Patentansprüche

1. Teigwarenprodukt aus einer Anordnung von parallelen Teigwarenabschnitten mit kreisrundem Querschnitt, dadurch gekennzeichnet, dass die benannten Abschnitte hohl und durch Befeuchtung miteinander verklebt sind, um einen einzigen Block in Form einer Scheibe zu bilden, der nach dem Kochen/Bakken ein hexagonales inneres Gefüge darzubieten bestimmt ist, wobei dieses Paket eine ebene Ober- und Unterseite darbietet, die Unterseite verschlossen ist und die Hohlräume der benannten Abschnitte dazu bestimmt sind, mit einer Sosse gefüllt zu werden.

2. Teigwarenprodukt gemäss Anspruch 1, dadurch gekennzeichnet, dass das Paket von quadratischer, rechteckiger, dreieckiger, vieleckiger oder kreisrunder Gestalt ist.

3. Teigwarenprodukt gemäss Anspruch 1, dadurch gekennzeichnet, dass das Paket von sechseckiger Gestalt ist und dass es zumindest 17, vorzugsweise 37, 61 oder 91 Teigwarenabschnitte umfasst.

4. Teigwarenprodukt gemäss einem der vorangehenden Ansprüche, dadurch gekennzeichnet, dass es zwischen der Ober- und Unterseite eine Dicke aufweist, die so bestimmt wurde, dass das Paket eine gute Festigkeit aufweist und sich angenehm zum Munde führen lässt.

5. Teigwarenprodukt gemäss Anspruch 4, dadurch gekennzeichnet, dass die Teigwarenabschnitte Makkaroni einer Länge zwischen 1 und 4 cm sind.

6. Produkt gemäss einem der vorstehenden Ansprüche, dadurch gekennzeichnet, dass die Unterseite durch ein Teigwarentäfelchen derselben Gestalt und Abmessungen wie die Anordnung verschlossen ist.

7. Teigwarenprodukt gemäss einem der Ansprüche 1 bis 6, dadurch gekennzeichnet, dass die Anordnung aus Teigwarenabschnitten zumindest teilweise von Kunststoffolie umgeben ist, die ein Kochen in Wasser aushält und Öffnungen hat.

8. Verfahren zur Herstellung eines Teigwarenprodukts gemäss einem der Ansprüche 1 bis 7, dadurch gekennzeichnet, dass man die gewählte Anzahl von Teigwarenabschnitten mit hohlem, kreisrundem Querschnitt parallel zur gewünschten Gestalt zusammensetzt, dass man zumindest die Enden der Abschnitte, die zumindest eine Seite der Anordnung darstellen, leicht anfeuchtet und dass man einen leichten Druck ausübt, um die Abschnitte aneinanderzudrücken und einen einzigen Block in der Gestalt einer Scheibe zu bilden.

9. Verfahren gemäss Anspruch 8, dadurch gekennzeichnet, dass man danach die Seite des Pakets auf ein Teigwarenplättchen aufsetzt, das vorzugsweise leicht angefeuchtet ist, dass man das Paket auf das benannte Plättchen aufdrückt, dass man das Teigwarenplättchen in derselben Gestalt und in denselben Abmessungen wie das Paket ausschneidet und dass man das Produkt sofort trocknet oder kocht/bäckt.

10. Verfahren gemäss Anspruch 8, dadurch gekennzeichnet, dass man eine Anordnung von Teigwarenabschnitten in gewählter Gestalt in eine durch eine Kunststoffolie dargestellte Verpackung setzt.

11. Verfahren der Bereitung eines verzehrbaren Teigwarenprodukts, dadurch gekennzeichnet, dass man das Teigwarenprodukt gemäss einem der Ansprüche 1 bis 7 in einer siedenden Kochflüssigkeit kocht, die Kochflüssigkeit abgiesst, abtropfen lässt, es flach hinlegt und in zumindest einige der hohlen Teigwarenabschnitte Sosse einfüllt.
